# FASCICULE DE BREVET EUROPEEN

(11) **EP 0 505 810 B1**
(45) Date de publication et mention de la délivrance du brevet: **15.06.1994**
(21) Numéro de dépôt: 92103989.7
(22) Date de dépôt: 09.03.1992
(51) Int. Cl.: B60B 21/12, B60C 29/02

(54) **Jante dont la gorge est obturée par une garniture annulaire munie d'une valve**
Radfelge, dessen rinnenförmiges Tiefbett mit einer mit einem Ventil ausgestatteten Dichtung gefüllt ist
Circumferential well portion of a wheel rim, filled with an annular sealing joint which is provided with a valve

(30) Priorité: 29.03.1991 FR 9103998
(43) Date de publication de la demande: 30.09.1992
(73) Titulaire: COMPAGNIE GENERALE DES ETABLISSEMENTS MICHELIN - MICHELIN & CIE, 63040 Clermont-Ferrand Cédex (FR)
(72) Inventeur: Gergele, Jean, F-63140 Chatel-Guyon (FR)
(74) Mandataire: Devaux, Edmond-Yves

(56) Documents cités:
- DE-A- 2 345 628
- DE-A- 2 414 885
- DE-C- 2 436 735
- FR-A- 2 331 456

## Description

L'invention concerne une jante destinée à être équipée d'un pneumatique et plus particulièrement du type sans chambre à air indépendante.

Le brevet FR 2 257 442 enseigne que de telles jantes sont généralement munies d'une gorge, servant au montage et au démontage du pneumatique sans chambre. Ne servant que temporairement et sa présence étant gênante, il a été propose de déplacer cette gorge de jante en direction du rebord de jante extérieur et de l'obturer au moyen d'un dispositif amovible. Afin d'assurer une étanchéité parfaite de la cavité pneumatique et de permettre une mise en place, une immobilisation et une dépose faciles, le brevet cité préconise l'emploi d'une garniture annulaire, souple, extensible formant le siège du bourrelet du pneumatique concerné et préférentiellement l'emploi d'une garniture en caoutchouc compressible sans variation de volume.

Comme montré sur la figure 6 dudit brevet et sans plus amples commentaires, la garniture annulaire peut comporter une valve de gonflage.

Que ce soit sous effort d'extension, comme c'est le cas pendant le montage et la mise en place de la garniture ou comme c'est le cas partiellement sous l'effet de la force centrifuge, ou sous effort de compression sous l'effet du serrage du bourrelet sur la garniture, la valve métallique ou plastique introduit dans la garniture une variation locale de propriétés, et en conséquence une variation de comportement du bourrelet qui prend appui sur ladite garniture. Réciproquement, le pourtour de la valve est soumis à des concentrations de contraintes, ce qui favorise un décollage prématuré de la valve du caoutchouc de la garniture. En outre, bien que moins sensible que dans le cas où elle est vissée dans une partie métallique, la valve n'en reste pas moins vulnérable aux chocs, particulièrement au niveau de son encastrement.

L'invention a pour but de remédier aux inconvénients cités. Ainsi, la jante conforme au préambule de la revendication 1 et au brevet FR 2 257 442 comporte un fond, deux sièges pour bourrelet de pneumatique, deux rebords de jante, et est pourvue d'une gorge de montage voisine du rebord extérieur au véhicule, et d'un dispositif annulaire, sous forme de garniture souple en caoutchouc, obturant ladite gorge, servant de siège à un bourrelet de pneumatique et dans laquelle est insérée la valve de gonflage.

Conformément à l'invention, cette jante est caractérisée en ce que le corps de valve est gainé d'une couche de vulcanisat d'épaisseur comprise entre 0,5 mm et 10 mm et de module sécant d'élasticité en compression sous une déformation relative de 10 % au plus égal à 0,20 fois le module sécant d'élasticité en compression à 10 % de déformation du vulcanisat constituant la garniture annulaire, et en ce que l'orifice intérieur de la valve débouche sur une rainure aménagée dans la jante, et destinée à l'entrée de l'air de gonflage.

Le module sécant de compression d'un vulcanisat mesuré à 10 % de déformation est égal au rapport de la force de compression nécessaire pour déformer de 10 % une éprouvette de section donnée, sur le produit de ladite section par la déformation relative de 0,1. Les deux modules concernés sont mesurés dans les mêmes conditions.

La différence de modules entre le vulcanisat servant au gainage de la valve et le vulcanisat constituant la garniture, outre qu'elle résout le problème à la base de l'invention, présente un avantage inattendu. Celui-ci consiste à procurer une meilleure étanchéité de l'ensemble roulant. En effet, l'orifice créé dans la jante pour le passage de la tête de valve a un diamètre supérieur au diamètre du corps de valve cylindrique.

Dans le cas d'une valve normale insérée directement dans la garniture annulaire, les déformations subies par celle-ci permettent le passage de l'air entre la jante et cette garniture au niveau dudit orifice.

Par contre, dans le cas d'une valve gainée ou enrobée d'un vulcanisat à très faible module comparativement au module du vulcanisat de la garniture, sous l'effet de la pression de gonflage, prend naissance un déplacement vers l'extérieur de la valve, ce qui entraîne par cisaillement du vulcanisat de gainage une meilleure étanchéité.

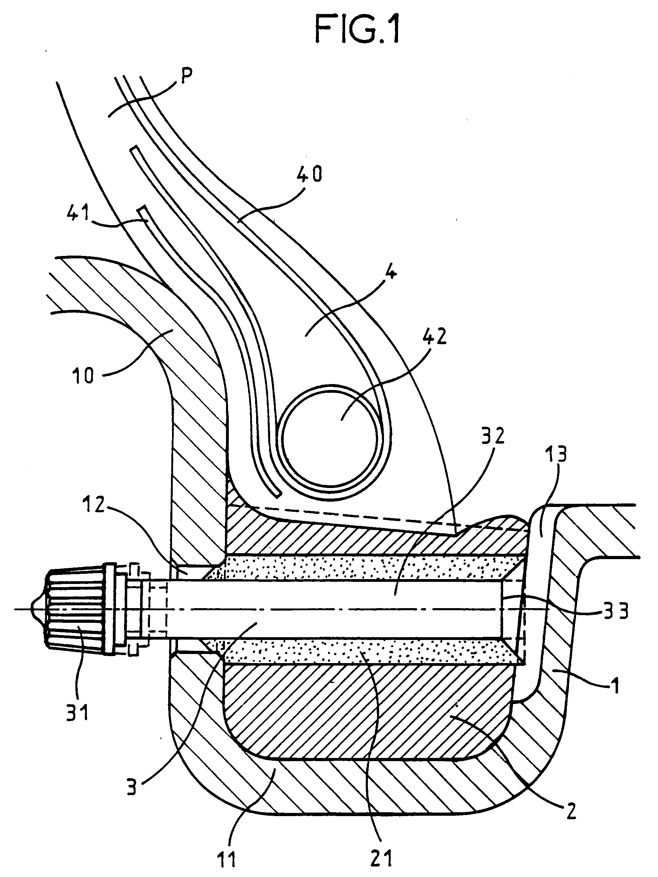

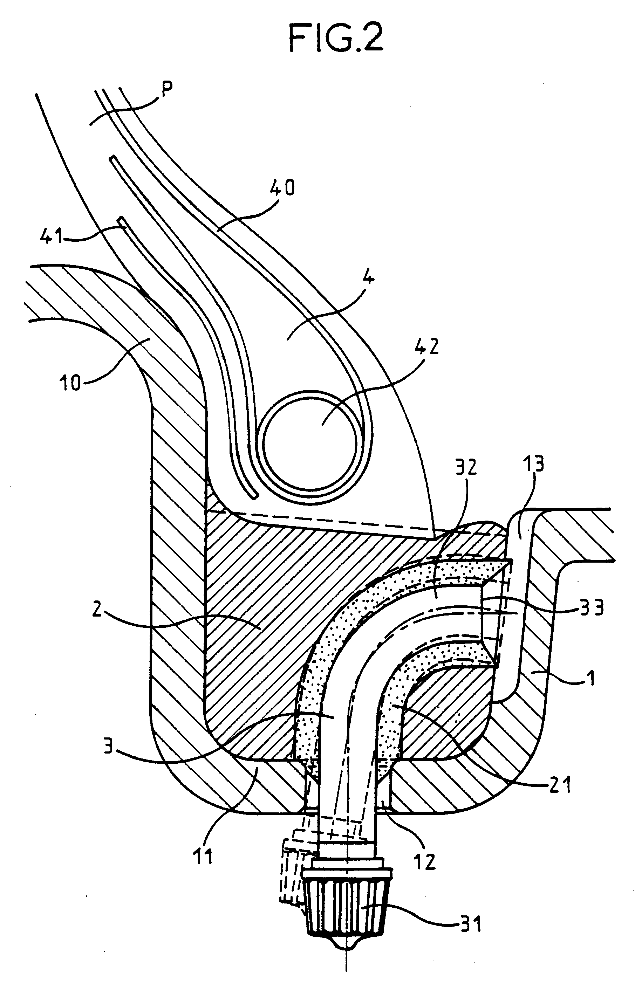

L'invention sera mieux décrite à l'aide du dessin annexé à la description, illustrant des exemples non limitatifs d'exécution. La figure 1 de ce dessin montre une coupe méridienne partielle de l'ensemble formé de la jante de montage, de la garniture annulaire, de la valve de gonflage et d'un bourrelet de pneumatique. La figure 2 montre une garniture avec une valve coudée.

La gorge de montage (11) de la jante (1) est contigue au rebord (10). Cette gorge (11) est munie d'une garniture (2) qui comporte une valve (3) avec un bouchon de valve (31) et le corps de valve (32). La face radialement extérieure de la garniture (2) fait office de siège de jante par le bourrelet (4) du pneumatique (P), comportant une tringle (42) autour de laquelle est enroulée une armature de carcasse (40) radiale. Ce bourrelet (4) est en outre renforcé par une nappe de renfort (41) ayant des câbles faiblement inclinés par rapport à la direction circonférentielle du pneumatique (P).

Le corps de valve (32) est entouré d'une gaine (21) de vulcanisat, c'est-à-dire d'un mélange d'élastomère, de charges, et d'additifs couramment utilisés en caoutchouterie, vulcanisé, ayant d'une part la propriété de coller au métal laitonné formant le corps de valve (32), et d'autre part un module sécant d'élasticité, en compression sous une déformation relative de 10 %, égal à 3 MPa, alors que le module d'élasticité du vulcanisat formant le reste de la garniture annulaire (2) est égal à 33 MPa. La gaine (21) a une épaisseur de 3,5 mm.

L'orifice intérieur (33) de la valve de gonflage (3) débouche sur la rainure (13) de passage de l'air, aménagée dans la jante (1).

Sur la figure sont tracées en pointillés les limites axialement intérieure et extérieure du corps de valve gainé avant mise en place du bourrelet correspondant du pneumatique sur le siège formé par la garniture (2), sont tracées, en traits pleins, les mêmes limites après montage du bourrelet et gonflage du pneumatique. Il est nettement visible que le corps de valve (32) s'est déplacé axialement vers l'extérieur de l'ensemble roulant, la déformation résultant de la gaine (21) dans le trou de valve (12), réalisé dans la jante (1), permettant une meilleure étanchéité.

En conservant les mêmes références, pour plus de simplicité, la figure 2 montre une valve (3) qui diffère de la valve (3) de la figure 1 seulement par la forme, le corps de valve (32) étant alors coudé de manière à avoir l'orifice d'entrée de la valve (3) radialement à l'intérieur de la jante (1).

## Revendications

1. Jante pour pneumatique, avec un fond, deux sièges pour les bourrelets dudit pneumatique (P), deux rebords (10), pourvue d'une gorge de montage (11), voisine du rebord (10) de jante extérieur au véhicule et d'un dispositif annulaire sous forme de garniture souple (2) en caoutchouc, obturant ladite gorge (11) servant de siège à un bourrelet (4) du pneumatique (P) et dans laquelle est insérée la valve de gonflage (3) caractérisée en ce que le corps de valve (32) est gainé d'une couche de vulcanisat (21), d'épaisseur (e) comprise entre 0,5 mm et 10 mm et dont le module sécant d'élasticité sous effort de compression mesuré pour une déformation relative de 10 % est au plus égal à O,20 fois le module sécant d'élasticité en compression à 10 % de déformation du vulcanisat formant la garniture (2), et en ce que l'orifice intérieur (33) de la valve (3) débouche sur un évidement (13) aménagé dans la jante (1).

2. Jante selon la revendication 1, caractérisée en ce que le corps de valve (32) est coudé de manière à ce que l'orifice d'entrée de la valve (3) soit situé radialement à l'intérieur de la jante.

## Patentansprüche

1. Felge für Luftreifen, mit einem Boden, zwei Sitzen für die Wülste des Luftreifens (P), zwei Ränder (10), versehen mit einer Montagekerbe (11), die sich in der Nähe des Felgenrandes (10) außerhalb des Fahrzeugs befindet, und mit einer ringförmigen Vorrichtung versehen ist in Form einer weichen Gummigarnitur (2), die die Kerbe (11) überdeckt, wobei sie als Sitz einem Wulst (4) des Luftreifens (P) dient, und in der das Aufblasventil (3) eingesetzt ist, dadurch gekennzeichnet, daß der Ventilkörper (32) mit einer Vulkanisatschicht (21) von einer Dicke (e) zwischen 0,5 mm und 10 mm umhüllt ist, und dessen Elastizitäts-Sekansmodul unter Druckeinwirkung, gemessen für eine relative Verformung von 10 % gleich oder größer ist als das 0,20fache des Elastizitäts-Sekansmoduls unter Druck bei 10 % Verformung des Vulkanisats, das die Garnitur (2) bildet, und daß die innere Öffnung (33) des Ventils (3) auf eine Ausnehmung (13) mündet, die in der Felge (1) ausgebildet ist.

2. Felge nach Anspruch 1, dadurch gekennzeichnet, daß der Ventilkörper (32) derart abgebogen bzw. abgeknickt ist, daß die Eintrittsöffnung des Ventils (3) radial im Inneren der Felge angeordnet ist.

## Claims

1. A tyre rim having a base, two seats for the beads of said tyre (P), two flanges (10), provided with a mounting groove (11) adjacent to the rim flange (10) on the outside of the vehicle and with an annular device in the form of a flexible packing (2) of rubber, closing said groove (11), serving as a seat for a bead (4) of the tyre (P), and in which the inflation valve (3) is inserted, characterised in that the valve body (32) is sheathed by a layer of vulcanised rubber (21) of a thickness (e) of between 0.5 mm and 10 mm and having a secant modulus of elasticity which, under compressive force measured for a relative deformation of 10%, is equal to at most 0.20 times the secant modulus of elasticity in compression with 10% deformation of the vulcanised rubber forming the packing (2), and in that the inner-side orifice (33) of the valve (3) communicates with a recess (13) provided in the rim (1).

2. A rim according to Claim 1, characterised in that the valve body (32) is bent so that the entrance orifice of the valve (3) is located radially to the inside of the rim.
